# EUROPEAN PATENT APPLICATION

(11) **EP 1 422 409 A1**
(43) Date of publication of application: **26.05.2004**
(21) Application number: 02762846.0
(22) Date of filing: 26.08.2002
(51) Int. Cl.: F02D 21/08, F01N 3/24, F02M 25/07

(54) **METHOD OF CONTROLLING OPERATION OF INTERNAL COMBUSTION ENGINE**

(30) Priority: 27.08.2001 JP 2001256168
(71) Applicant: Yanmar Co., Ltd., Osaka-shi, Osaka 530-0013 (JP)
(72) Inventor: YAMADA, Osamu c/o Yanmar Co., Ltd., Osaka-shi, Osaka 530-0013 (JP); NAKAZONO, Tohru c/o Yanmar Co., LTD., Osaka-shi, Osaka 530-0013 (JP); MATSUBAYASHI, Syougo c/o Yanmar Co., LTD., Osaka-shi, Osaka 530-0013 (JP)
(74) Representative: Pluckrose, Anthony William
(86) International application number: PCT/JP2002/008537
(87) International publication number: WO 2003/018983

(57) **Abstract**

In an internal combustion engine utilizing an exhaust gas recirculation, an exhaust gas recirculation rate is set to a minimum or zero at a small engine load.

The exhaust gas recirculation is carried out after lowering an exhaust gas temperature by a heat exchanger.

An engine load smaller than a specified value is set to a small engine load operation region.

A thermal efficiency is set to a desired value by controlling an excess air ratio and the exhaust gas recirculation rate.

Further, when a NOₓ absorbing catalyst is installed in an exhaust gas passage, the exhaust gas temperature is raised by setting the exhaust gas recirculation rate to zero and regeneration of the NOₓ absorbing catalyst is accelerated. The exhaust gas recirculation rate is set to a minimum or zero at time of carrying out a rich spike work.

## Description

### TECHNICAL FIELD

This invention relates to an operation control method for internal combustion engine (including an internal combustion engine equipped with a NOₓ absorbing catalyst in its exhaust passage) which utilizes an EGR, and an object is to stabilize its combustion.

### BACKGROUND ART

In a conventional internal combustion engine utilizing the EGR in which a part of exhaust gas is returned to a combustion chamber, the exhaust gas is constantly supplied to the combustion chamber regardless of operating conditions. Since a high thermal efficiency can be obtained when the EGR is utilized at time of a large engine load or a large engine revolution, the EGR is often utilized in the internal combustion engine (particularly in a GHP engine). In this instance, the GHP engine means an engine for driving a heat pump system.

In the event when the EGR is utilized at time of small engine load or the small engine revolution, misfire cycle would increase to cause an unstable combustion according to circumstances. Since an EGR rate (an exhaust gas quantity contained in the total air quantity supplied to the combustion chamber) has been kept at a constant value in the conventional internal combustion engine, a good thermal efficiency has been obtained at a large engine load but the combustion has not been stable at a small engine load.

In an automobile gasoline engine, its engine revolution rapidly rises up to around 1, 500 to 2, 000 min⁻¹ during operation and very stable combustion can be accomplished. In the GHP engine, however, its combustion becomes unstable in a low engine revolution region (below 1, 000 min⁻¹) . In recent years, demands to carry out a stable operation in this low engine revolution region have been increasing.

### DISCLOSURE OF THE INVENTION

### (Technical Problem to be dissolved by the Invention)

An object of this invention is to provide an operation control method for internal combustion engine in which a good thermal efficiency can be obtained and a stable combustion can be accomplished at a small engine load.

### (Solution to dissolve the Problem)

In order to dissolve the above problem, a claim 1 discloses an invention in an internal combustion engine utilizing an EGR, in which an EGR rate is set to a minimum or zero at a small engine load.

A claim 2 discloses an invention as set forth in claim 1, in which an exhaust gas is recirculated after lowering an exhaust gas temperature by a heat exchanger.

A claim 3 discloses an invention as set forth in claim 1, in which an engine load smaller than a specified value is set to a small engine load operation region.

A claim 4 discloses an invention as set forth in claim 1 or claim 2, in which a thermal efficiency is set to a desired value by controlling an excess air ratio and the EGR rate.

A claim 5 discloses an invention in an internal combustion engine equipped with a NOₓ absorbing catalyst in its exhaust gas passage and utilizing an EGR; in which an EGR rate is set to a minimum or zero at a small engine load, an exhaust gas temperature is raised by setting the EGR rate to a minimum or zero, and regeneration of the foregoing NOₓ absorbing catalyst is accelerated.

A claim 6 discloses an invention in an internal combustion engine equipped with a NOₓ absorbing catalyst in its exhaust gas passage and utilizing an EGR; in which the EGR rate is set to a minimum or zero at a small engine load, and the EGR rate is set to a minimum or zero when carrying out a rich spike work.

### (Effect more effective than Prior Art)

In the invention of claim 1, since the EGR rate is set to a minimum or zero when the operation region of an internal combustion engine 100 belongs to the small engine load, a NOₓ density can be controlled to a small value while keeping the thermal efficiency at a large value.

In the invention of claim 2, since the exhaust gas temperature is lowered by the heat exchanger, the NOₓ density can be decreased.

In the invention of claim 3, since the engine load smaller than a specified value is set to the small engine load operation region to determine the EGR rate; a good thermal efficiency can be obtained and at the same time the combustion can be stabilized, and the NOₓ density can be decreased.

In the invention of claim 4, a good thermal efficiency can be obtained by appropriately setting a combination of the excess air ratio λ and the EGR rate.

In the invention of claim 5, the exhaust gas temperature can be rapidly raised and the regeneration of the NOₓ catalyst can be carried out quickly by setting the EGR rate to zero.

In the invention of claim 6, the regeneration of the NOₓ catalyst can be carried out quickly by setting the EGR rate to a minimum or zero when carrying out the rich spike.

### BRIEF DESCRIPTION OF THE DRAWINGS

Fig. 1 is a schematic system diagram of the internal combustion engine to which the inventions of claim 1 to claim 6 are applied.
Fig. 2 is a graph showing a relation between the engine load of internal combustion engine and a Piv forming an index indicating a degree of instability of combustion.
Fig. 3 is a graph showing the operation region utilizing the EGR and the operation region not utilizing the EGR.
Fig. 4 is a graph different from Fig. 3, showing the operation region utilizing the EGR and the operation region not utilizing the EGR.
Fig. 5 is a graph different from Fig. 3 and Fig. 4, showing the operation region utilizing the EGR and the operation region not utilizing the EGR.
Fig. 6 is a graph showing a relation between the NOₓ density in exhaust gas and the thermal efficiency.
Fig. 7 is a graph showing a relation between the excess air ratio λ, and the NOₓ quantity when setting the EGR rate to 0%, 5%, and 10% respectively.
Fig. 8 is a graph showing a relation between the engine load and the exhaust gas temperature.
Fig. 9 is a graph showing a relation between the exhaust gas temperature and a regeneration speed of the NOₓ absorbing catalyst.
Fig. 10 is a graph showing a relation between the exhaust gas (EGR gas) temperature and the NOₓ density, at time when the EGR rate is other than zero.

### BEST MODE FOR CARRYING OUT THE INVENTION

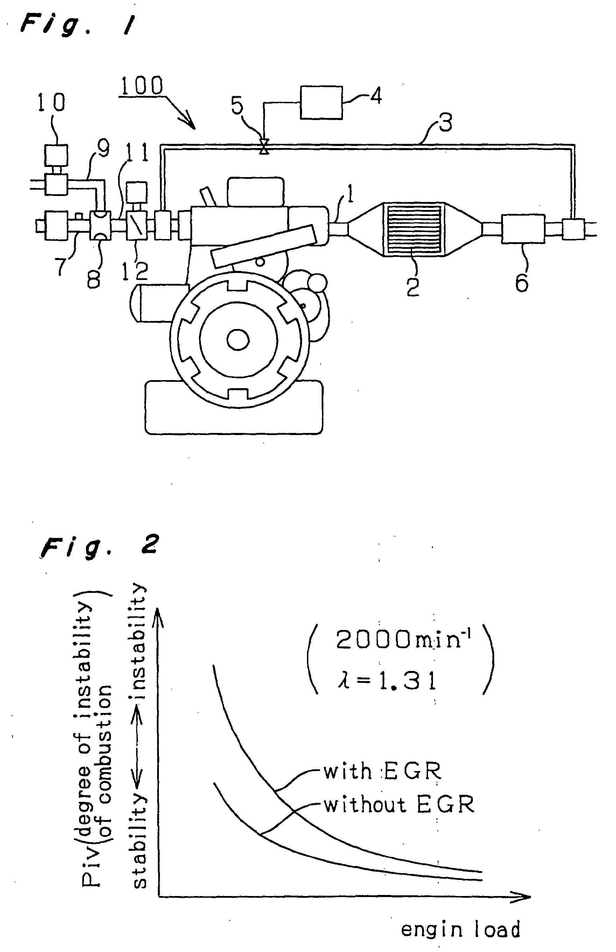

Fig. 1 is the schematic system diagram of the internal combustion engine 100 to which the inventions of claim 1 to claim 6 are applied. A charge air pipe 7, a fuel pipe 9, a mixer 8 which mixes air charged from the charge air pipe 7 and the fuel pipe 9 with fuel gas, and a mixture feeding pipe 11, are connected to an upstream side of a combustion chamber of the internal combustion engine 100.

By adjusting an opening of a fuel feeding quantity adjusting valve 10, a fuel quantity fed to the mixer 8 can be adjusted and the excess air ratio λ can be set to a voluntary value. Further, a mixture amount fed to the combustion chamber can be adjusted by adjusting an opening of a throttle 12.

An exhaust pipe 1 (exhaust gas passage) is connected to a downstream side of the combustion chamber. The exhaust pipe 1 is equipped at its midway with a NOₓ absorbing catalyst 2 and a heat exchanger 6 in this order from the upstream side. As shown in Fig. 1, the exhaust pipe 1 positioned at the downstream side from the heat exchanger 6 is able to be connected the mixture feeding pipe 11 through an exhaust gas return pipe 3. Consequently, it is possible to let a part of exhaust gas flow in the mixture feeding pipe 11 (or a not-shown mixture feeding branch pipe positioned at its downstream side) through the exhaust gas return pipe 3. An example where the exhaust pipe 1 is equipped with the NOₓ absorbing catalyst 2 is described above, however, it is recommended that whether the NOₓ absorbing catalyst 2 is installed or not is decided depending on a produced amount of the NOₓ as cited in an operating specification of the internal combustion engine 100.

A throttle valve 5 is installed in a midway of the exhaust gas return pipe 3. An opening of the throttle valve 5 can be adjusted by a CPU 4. A flow-in quantity of exhaust gas into the mixture feeding pipe 11 is decreases when the opening of the throttle valve 5 is made small. On the contrary, the flow-in quantity is increased when the opening is made large. The EGR rate will become large when flow-in quantity of exhaust gas into the mixture feeding pipe 11 becomes large. The EGR rate will become small when the flow-in quantity becomes small.

Accordingly, the EGR rate will be increased when the opening of the throttle valve 5 is increased, and the EGR rate will be decreased when the opening is decreased. Therefore, the EGR rate can be set to a voluntary value by adjusting the opening of the throttle valve 5 through means of the CPU 4.

Not-shown plural sensors are installed in the internal combustion engine 100. An engine revolution, an engine load, a cooling water temperature, an ignition timing, an excess air ratio λ and an exhaust gas temperature etc. of the internal combustion engine 100 are inputted in the CPU 4 through these sensors. The CPU 4 is equipped with a memory which previously memorizes a map of most suitable combination of the EGR rate corresponding to the operation region and the excess air ratio. The CPU 4 compares signals detected by these sensors with this map so as to change the opening of the throttle valve 5 and the EGR rate in order to control the NOₓ density at the upstream side of the NOₓ absorbing catalyst and to obtain a stable combustion and a good thermal efficiency.

Fig. 2 is the graph showing the relation between the engine load of the internal combustion engine 100 and Piv forming the index including the degree of instability of combustion. In Fig. 2, the engine revolution is set to 2, 000 min⁻¹ and the excess air ratio λ is set to λ=1.31.

When comparing a case where the opening of the throttle valve 5 is set to zero (i.e. the EGR rate is set to zero) with a case where the EGR rate is set to 10% under these conditions, it can be understood that a smaller EGR rate will cause a more stable combustion with a decrease in the engine load. Therefore, it is desirable that the EGR rate is set to zero when the engine load is small.

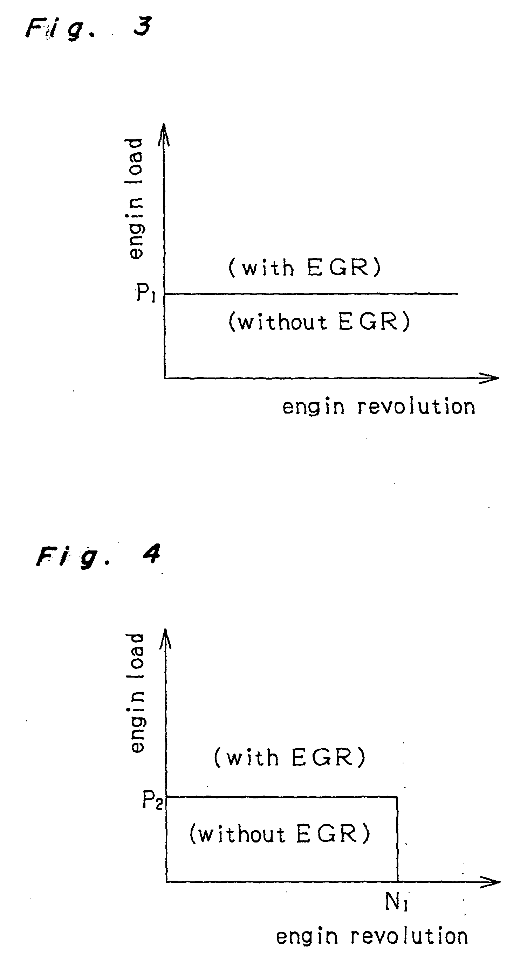

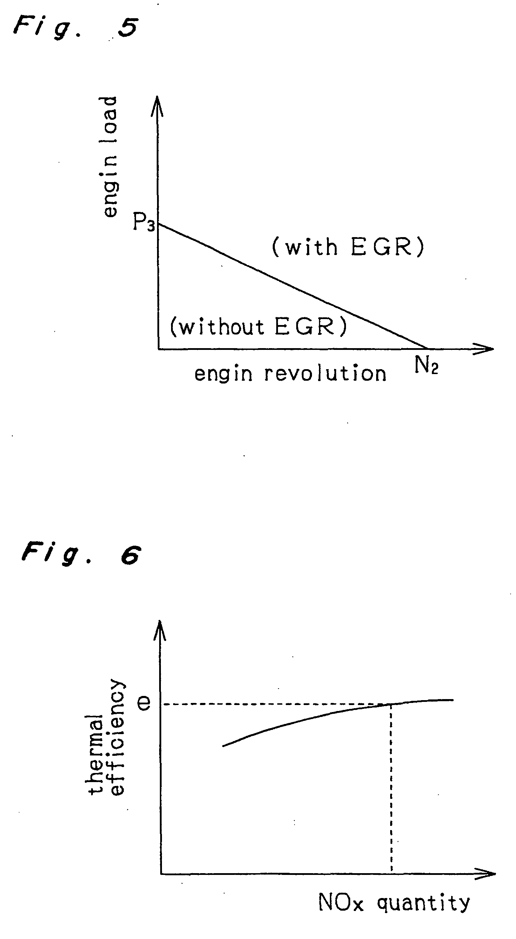

However, it is not desirable to evenly set the EGR rate at small engine load to zero in consideration of a balance with an obtained thermal efficiency. Therefore, it is recommended to previously investigate an operation performance of the internal combustion engine 100, so that the EGR rate is set to zero in a load region smaller than the engine load P₁ as illustrated by Fig. 3. In the same way, the EGR rate is set to zero in an operation region where the engine load is smaller than P₂ & P₃ and the engine revolution is smaller than N₁ & N₂ as illustrated by Fig. 4 and Fig. 5. In Fig. 3 through Fig. 5, the EGR rate is set in a range from 5% to 15%, for example, in an operation region described as "with EGR".

Fig. 6 is the graph showing the relation between the NOₓ density in exhaust gas and the thermal efficiency. When the EGR rate is increased, a good thermal efficiency can be obtained but the generated NOₓ quantity (NOₓ density) will also be increased. However, when the thermal efficiency reaches a value e as illustrated by Fig. 6, an increasing rate of the thermal efficiency becomes moderate. And, it can be understood that the thermal efficiency is scarcely increased thereafter as compared with an increase in the NOₓ quantity. Consequently, the thermal efficiency e at this moment is set to the upper limit value, so that the CPU 4 adjusts the opening of the throttle valve 5 so as to attain the EGR rate necessary for obtaining the thermal efficiency e.

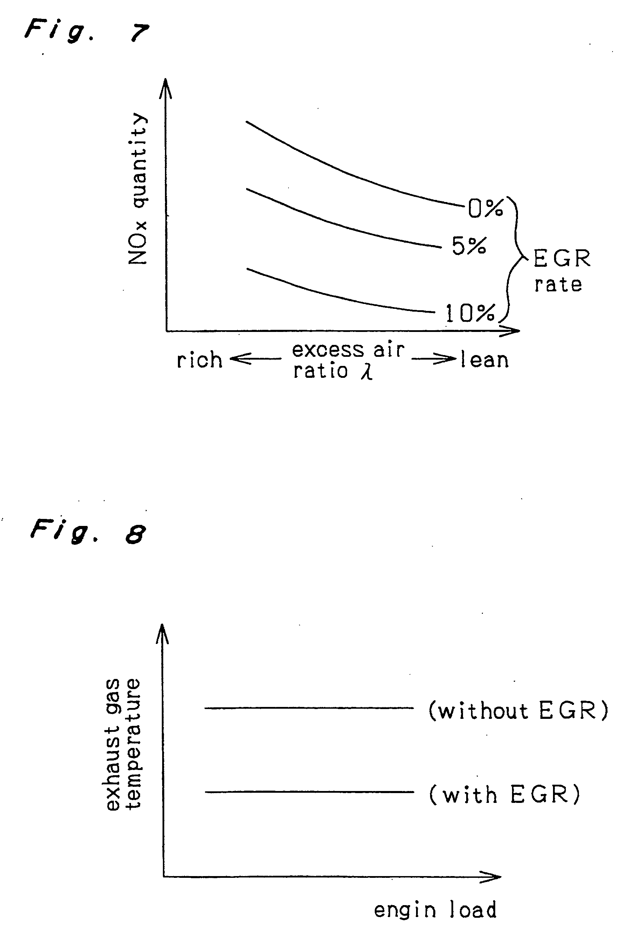

Fig. 7 is the graph showing the relation between the excess air ratio λ and the NOₓ quantity, when the EGR rate is set to 0%, 5%, and 10% respectively. It can be understood from Fig. 7 that the NOₓ quantity is decreased with an increase in the EGR rate, and that the NOₓ quantity is decreased as the excess air ratio λ becomes lean.

Fig. 8 is the graph showing the relation between the engine load and the exhaust gas temperature. As shown in Fig. 8, it can be understood that the exhaust gas temperature becomes high as the EGR rate is set to small value.

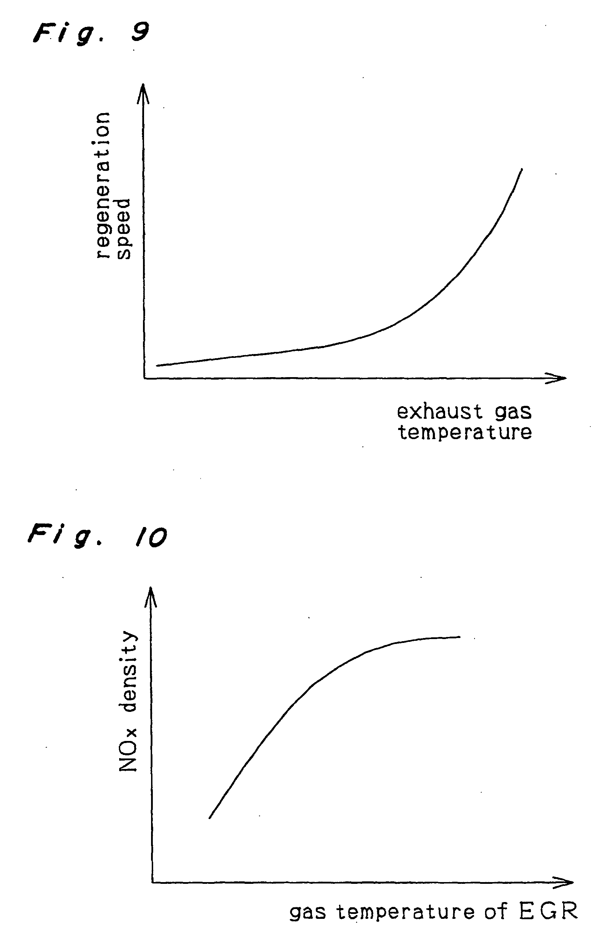

Fig. 9 is the graph showing the relation between the exhaust gas temperature and regeneration speed of the NOₓ absorbing catalyst 2. When the NOₓ absorbing catalyst 2 gets to the absorbing limit of NOₓ, it can not absorb NOₓ any more so that cleaning of the exhaust gas can not be done. Therefore, a work called as "rich spike" is carried out wherein the excess air ratio λ, is set to rich value. By the rich spike work, the NOₓ absorbed by the NOₓ absorbing catalyst 2 is reduced and an absorbing capacity of the NOₓ absorbing catalyst 2 will recovered to its original state.

The work, in which the NOₓ absorbing capacity of the NOₓ absorbing catalyst 2 is returned to its original state, is called as the regeneration. It can be seen from Fig. 9 that a regeneration speed has a tendency to become quick as the exhaust gas temperature rises up. Consequently, during the regeneration of the NOₓ absorbing catalyst 2, the exhaust gas temperature can be raised up and the NOₓ absorbing catalyst 2 can be regenerated early by setting the EGR rate to zero.

Fig. 10 is the graph showing the relation between the exhaust gas (EGR gas) temperature and the NOₓ density in the exhaust gas return pipe 3, at time when the EGR rate is other than zero (i.e. when the throttle valve 5 is opened).

It can be understood from Fig. 10 that the NOₓ density increases with an increase in the EGR gas temperature. In other words, since the NOₓ density can be decreased with a decrease in the EGR gas temperature, the temperature of exhaust gas is lowered by the heat exchanger 6 and the exhaust gas lowered in its temperature is supplied to the mixture feeding pipe 11.

In the foregoing descriptions, the "small engine load" can be set to a voluntary value considering the operation performance of the internal combustion engine 100. For instance, an engine load smaller than a half of rated load can be designated as the "small engine load".

### INDUSTRIAL APPLICABILITY

This invention can be applied to internal combustion engines for land and marine purposes utilizing the EGR.

## Claims

1. An operation control method for internal combustion engine utilizing an exhaust gas recirculation, in which an exhaust gas recirculation rate at a small engine load is set to a minimum or zero.

2. An operation control method for internal combustion engine as set forth in claim 1, in which the exhaust gas recirculation is carried out after lowering an exhaust gas temperature by a heat exchanger.

3. An operation control method for internal combustion engine as set forth in claim 1, in which an engine load smaller than a specified value is set to a small engine load operation region.

4. An operation control method for internal combustion engine as set forth in claim 1 or claim 2, in which a thermal efficiency is set to a desired value by controlling an excess air ratio and the exhaust gas recirculation rate.

5. An operation control method for internal combustion engine equipped with a NOₓ absorbing catalyst in its exhaust gas passage and utilizing an exhaust gas recirculation; in which an exhaust gas recirculation rate is set to a minimum or zero at a small engine load, an exhaust gas temperature is raised by setting the exhaust gas recirculation rate to a minimum or zero, and regeneration of the NOₓ absorbing catalyst is accelerated.

6. An operation control method for internal combustion engine equipped with a NOₓ absorbing catalyst in its exhaust gas passage and utilizing an exhaust gas recirculation; in which an exhaust gas recirculation rate is set to a minimum or zero at a small engine load, and the exhaust gas recirculation rate is set to a minimum or zero at time of carrying out a rich spike work.
